# NOUVEAU FASCICULE DE BREVET EUROPEEN

(11) **EP 0 628 778 B2**
(45) Date de publication et mention de la décision concernant l'opposition: **21.03.2001**
(45) Mention de la délivrance du brevet: 15.10.1997
(21) Numéro de dépôt: 94401194.9
(22) Date de dépôt: 31.05.1994
(51) Int. Cl.: F25J 3/04, C21C 7/068

(54) **Procédé et unité de fourniture d'un gaz sous pression à une installation consommatrice d'un constituant de l'air**
Verfahren und Hochdruckgasversorgungseinheit für eine ein Luftbestandteil verbrauchende Anlage
Process and high pressure gas supply unit for an air constituent consuming installation

(30) Priorité: 07.06.1993 FR 9306789
(43) Date de publication de la demande: 14.12.1994
(73) Titulaire: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: Ekins, Robert, Melbourne 3004 (AU); Guillard, Alain, F-75016 Paris (FR)
(74) Mandataire: Mercey, Fiona Susan

(56) Documents cités:
- EP-A- 0 171 711
- EP-A- 0 175 791
- EP-A- 0 235 295
- EP-A- 0 331 028
- EP-A- 0 363 861
- EP-A- 0 504 029
- DE-A- 3 016 317
- DE-C- 1 056 633
- GB-A- 742 779
- GB-A- 929 798
- JP-A- 2 293 575
- JP-B- 46 016 081
- JP-U- 4 733 767
- US-A- 2 708 831
- US-A- 2 908 144
- US-A- 2 940 269
- US-A- 5 082 482
- PATENT ABSTRACTS OF JAPAN vol. 015, no. 069 (M-1083) 19 Février 1991 & JP-A-02 293 575 (KOBE STEEL) 4 Décembre 1990
- Güther, H.: "Standard air separation plants, type of application, high purity gases, new developments", LINDE-Symposium Air Separation Plants, Juin 1986, pages 11 et 12 et fig. 14

## Description

La présente invention est relative à un procédé de fourniture à une installation consommatrice d'au moins un constituant de l'air d'un gaz sous pression liquéfiable à une température cryogénique sous cette pression, selon la revendication 1 .Un procédé selon l'art antérieur est connu par le JP-A-02 293 575.

L'invention s'applique en particulier à l'alimentation de certaines installations sidérurgiques en oxygène et/ ou en azote et/ou en argon.

Les pressions dont il est question ci-dessous sont des pressions absolues.

JP-A-02293575 divulgue un procédé de production d'oxygène et d'azote dans lesquels des débits d'oxygène liquide et d'azote liquide, provenant exclusivement de l'appareil de séparation utilisé pour mettre le procédé en oeuvre, sont envoyés à un échangeur où ils se vaporisent tout en condensant un débit d'air.

Certaines installations sidérurgiques consomment simultanément de l'oxygène gazeux sous pression, de l'azote gazeux sous pression et de l'argon gazeux sous pression, de l'azote gazeux sous pression et de l'argon gazeux sous pression, par exemple les fours à arc électriques destinés à produire de l'acier inoxydable (procédé AOD). La pression d'utilisation de ces gaz est typiquement de l'ordre de 25 bars, avec des consommations très variables, ce qui nécessite l'utilisation de « buffers » ou capacités-tampons alimentés sous une pression de l'ordre de 30 à 40 bars.

L'oxygène et l'azote sont généralement produits par une unité de distillation d'air montée sur le site, et les quantités d'argon nécessaires sont largement supérieures à la capacité de production d'argon de cette unité de distillation, laquelle ne peut dépasser 5 % du débit d'oxygène. Il est donc nécessaire d'approvisionner l'installation en argon à partir d'une source extérieure. Dans la technique habituelle, cet argon est vaporisé dans un appareil supplémentaire tel qu'une piscine à eau chaude.

Par ailleurs, l'évolution technologique ainsi que les impératifs de productivité ont pour conséquence une augmentation progressive de la consommation en oxygène dans les fours à arc, laquelle finit souvent par dépasser largement la capacité de séparation de l'appareil de distillation dédié au site.

L'invention a pour but de fournir un procédé permettant de satisfaire de façon particulièrement économique aux besoins en gaz, même très évolutifs, de l'installation.

A cet effet, l'invention a pour objet un procédé selon la revendication 1.

Le procédé peut comporter une ou plusieurs des caractéristiques suivantes :
- on produit simultanément au moins un constituant de l'air sous pression en amenant ce constituant sous forme liquide soutiré de l'appareil de distillation à une pression de vaporisation supérieure à sa pression de soutirage, et en vaporisant ce liquide sous cette pression de vaporisation dans la ligne d'échange thermique;
- ledit gaz est un gaz de l'air dont le débit est supérieur au débit de ce gaz produit au même instant par l'appareil de distillation;
- on effectue ladite vaporisation de façon permanente;
- pendant certaines périodes, on envoie de l'appareil de distillation au stockage du gaz sous forme liquide, et, pendant d'autres périodes, on effectue ladite vaporisation.

Des exemples de mise en oeuvre de l'invention vont maintenant être décrits en regard des dessins annexés, sur lesquels :
- la Figure 1 représente schématiquement une unité permettant de mettre en oeuvre le procédé conforme à l'invention; et
- les Figures 2 et 3 représentent schématiquement et partiellement deux variantes.

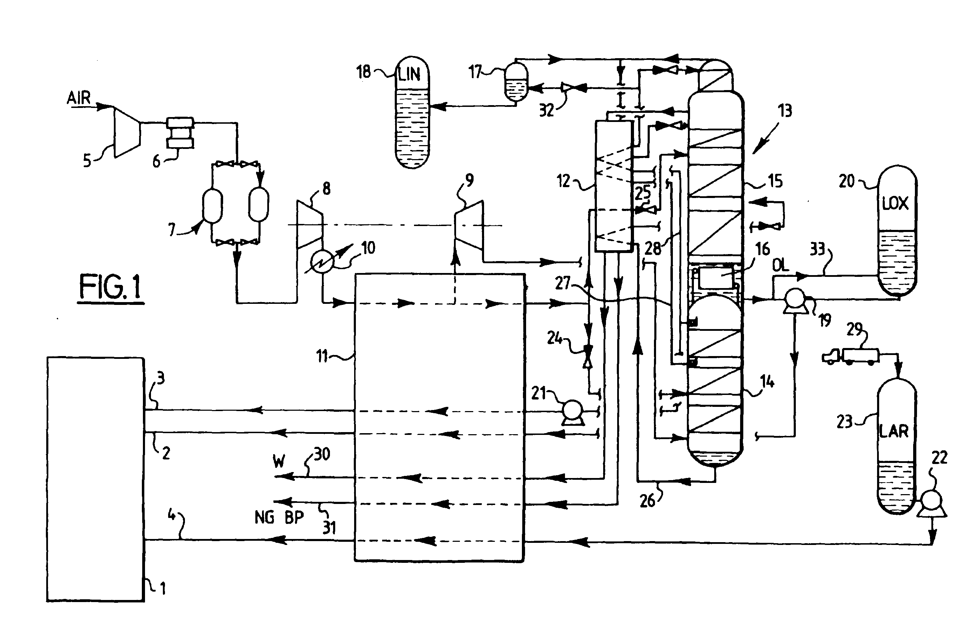

On a représenté à la Figure 1 une unité destinée à fournir à une installation consommatrice 1, qui est typiquement une installation sidérurgique mettant en oeuvre un procédé du type AOD, d'une part de l'oxygène gazeux sous pression, véhiculé par une conduite 2, d'autre part de l'azote gazeux sous pression, véhiculé par une conduite 3, et enfin de l'argon sous pression, véhiculé par une conduite 4. Cette unité produit en outre de l'azote gazeux sous basse pression, c'est-à-dire au voisinage de la pression atmosphérique, ainsi que de l'oxygène liquide et de l'azote liquide, ces liquides étant également à peu près sous la pression atmosphérique.

L'unité comprend essentiellement un compresseur d'air atmosphérique 5; un groupe frigorifique 6; un dispositif 7 de dessication-décarbonatation de l'air par adsorption; une soufflante 8 et une turbine de détente 9 dont les roues sont calées sur le même arbre, la soufflante étant munie d'un réfrigérant atmosphérique ou à eau 10; une ligne d'échange thermique 11 du type à contre-courant; un sous-refroidisseur 12; un appareil de distillation 13 constitué par une double colonne du type dit "à minaret", comprenant une colonne moyenne pression 14 qui fonctionne vers 5 à 6 bars et qui est surmontée d'une colonne basse pression 15 fonctionnant vers 1,2 bar, la tête de la colonne 14 étant couplée à la cuve de la colonne 15 par un vaporiseur-condenseur 16; un pot séparateur 17; un stockage 18 d'azote liquide; une pompe 19 d'oxygène liquide; un stockage 20 d'oxygène liquide; une pompe 21 d'azote liquide; une pompe 22 d'argon liquide; et un stockage 23 d'argon liquide. Les trois stockages 18, 20 et 23 sont sensiblement sous la pression atmosphérique.

En fonctionnement, l'air atmosphérique à distiller, comprimé en 5 puis refroidi en 6, est épuré en eau et en anhydrique carbonique en 7 puis surpressé en totalité en 8 et ramené au voisinage de la température ambiante en 10. L'air surpressé, qui se trouve à une haute pression nettement supérieure à la moyenne pression de la colonne 14, est refroidi en totalité jusqu'à une température intermédiaire T dans la ligne d'échange thermique 11. A cette température, une partie de l'air poursuit son refroidissement et est liquéfié et éventuellement sous-refroidi jusqu'au bout froid de la ligne d'échange thermique, puis, après détente dans des vannes de détente 24 et 25, réparti entre les deux colonnes 14 et 15.

A la température T, le reste de l'air est détendu à la moyenne pression en 9 puis introduit en cuve de la colonne 14.

On a également indiqué sur le dessin les conduites habituelles des doubles colonnes à minaret, c'est-à-dire produisant en tête de la colonne basse pression de l'azote pur sous cette basse pression. Les conduites 26 à 28 de remontée, respectivement, de "liquide riche" (air enrichi en oxygène), de "liquide pauvre inférieur" (azote impur) et de "liquide pauvre supérieur" (azote pratiquement pur), ces conduites partant respectivement de la cuve, d'un point intermédiaire et de la tête de la colonne 14, traversant le sous-refroidisseur 12 et étant chacune équipée d'une vanne de détente.

L'oxygène destiné à l'installation 1 est soutiré sous forme liquide en cuve de la colonne 15, amené à la pression d'utilisation par la pompe 19, et vaporisé et réchauffé jusqu'au voisinage de la température ambiante dans la ligne d'échange thermique.

De même, l'azote destiné à l'installation 1 est soutiré sous forme liquide en tête de la colonne 14, amené à sa pression d'utilisation par la pompe 21, et vaporisé et réchauffé jusqu'au voisinage de la température ambiante dans la ligne d'échange thermique.

L'argon destiné à l'installation 1 est stocké sous forme liquide dans le stockage 23, alimenté par des camions-citernes 29. L'argon liquide est soutiré de ce stockage, amené à sa pression d'utilisation par la pompe 22, et vaporisé et réchauffé jusqu'au voisinage de la température ambiante dans la ligne d'échange thermique.

De façon habituelle, l'azote impur constituant le gaz résiduaire de l'installation et l'azote pur produit en tête de la colonne 15 sont réchauffés en 12 puis en 11 et sortent de l'unité, respectivement, via des conduites 30 et 31.

L'unité produit en outre de l'azote liquide, pris sur la conduite 28 et détendu dans une vanne de détente 32 avant d'être introduit dans le pot séparateur 17. Le liquide issu de ce pot séparateur est envoyé au stockage 18, tandis que la phase vapeur est réunie au courant d'azote gazeux issu du sommet de la colonne 15. L'unité produit également de l'oxygène liquide, soutiré de la cuve de la colonne 15 et envoyé dans le stockage 20 via une conduite 33. Comme on le comprend, la quantité additionnelle de froid introduite dans la ligne d'échange thermique par la vaporisation et le réchauffement de l'argon liquide est récupérée pour produire de l'oxygène liquide et/ou de l'azote liquide.

En variante, l'appareil de distillation d'air peut comporter une colonne de production d'argon couplée de façon habituelle à la colonne 15, afin de produire une partie de l'argon fourni à l'installation 1.

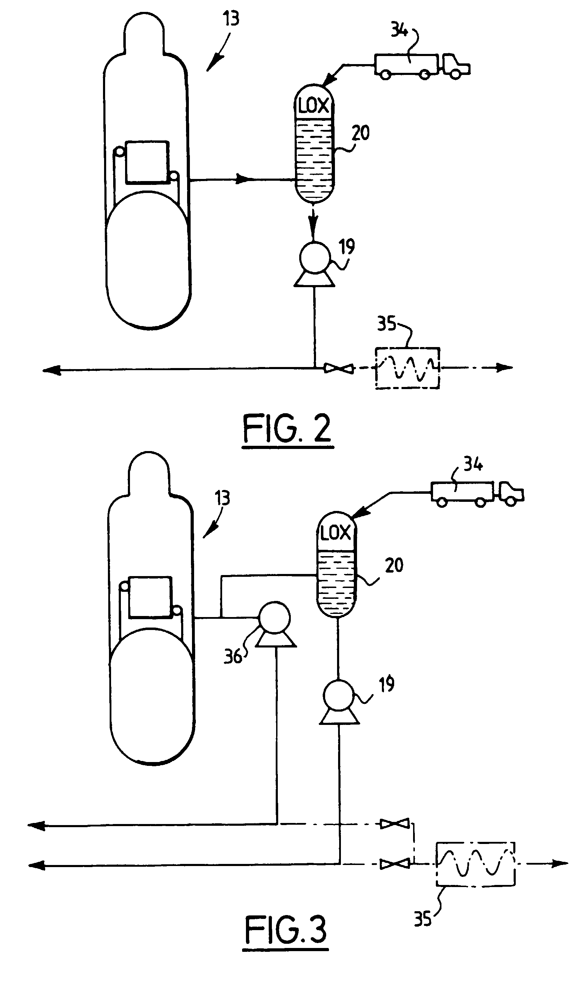

Les Figures 2 et 3 sont relatives à l'alimentation de l'installation en oxygène gazeux sous pression avec un débit supérieur à la capacité de séparation de l'appareil de distillation 13. Sur ces Figures, seuls ont été représentés la double colonne 13 et le circuit d'oxygène; le reste de l'installation est le même qu'à la Figure 1, à l'exception du circuit d'argon, qui est supprimé.

Dans le cas de la Figure 2, le stockage 20 est alimenté d'une part par la cuve de la colonne 15, d'autre part par des camions-citernes 34, tandis que l'aspiration de la pompe 19 n'est reliée qu'au fond du stockage 20. Ainsi, le débit nécessaire d'oxygène liquide peut être fourni à la ligne d'échange thermique pour être vaporisé et réchauffé. L'excès d'oxygène liquide vaporisé, c'est-à-dire la quantité fournie par les camions-citernes, fournit du froid qui peut être comme précédemment récupéré sous forme d'azote liquide additionnel envoyé au stockage 18.

Comme indiqué sur la Figure 3, en variante, on peut compléter le schéma de la Figure 2 par une seconde pompe d'oxygène liquide 36 dont l'aspiration est reliée à la cuve de la colonne 15. Les refoulements des deux pompes peuvent être reliés aux mêmes passages de vaporisation de la ligne d'échange thermique, ou bien à des passages de vaporisation distincts.

Comme indiqué en traits mixtes, le refoulement de la pompe 19 et/ou 36 peut également, en cas de nécessité, par exemple à titre de secours, être relié à un appareil auxiliaire de vaporisation classique 35 tel qu'une piscine. Dans ce mode de fonctionnement, le froid contenu dans l'oxygène liquide vaporisé est bien entendu perdu.

Dans chacun des cas des Figures 2 et 3, l'appareil de distillation peut remplir progressivement le stockage 20, pendant les périodes de faible demande en oxygène de l'installation consommatrice et/ou pendant les périodes de faible coût de l'énergie électrique, tandis que ce stockage se vide progressivement pendant les périodes de forte demande et/ou de coût élevé de l'énergie électrique et doit alors éventuellement être alimenté par des camions-citernes. Si la demande en oxygène est en permanence supérieure à la capacité de l'appareil de distillation, l'alimentation par camions-citernes doit bien entendu être effectuée régulièrement.

En variante, le stockage 20 de la Fig. 3 peut ne pas être relié à la double colonne 13 et n'être alimenté que par les camions-citernes 34. Dans ce cas, la pureté de l'oxygène livré par ces derniers peut être différente de celle de l'oxygène produit par la double colonne.

L'invention s'applique également à des procédés utilisant un appareil de distillation d'air à simple colonne, par exemple à un schéma à vaporisation d'argon tel que celui de la Figure 1 mais dans lequel l'appareil 13 est une simple colonne de production d'azote de type HPN (High Purity Nitrogen), associée à un cycle Claude d'air analogue à celui décrit plus haut. Dans ce cas, la vaporisation de l'argon permet de produire un excédent d'azote liquide.

## Revendications

1. Procédé de fourniture à une installation (1) consommatrice d'au moins un constituant de l'air, d'un gaz sous pression liquéfiable à une température cryogénique sous cette pression, dans lequel :
- on distille de l'air dans un appareil de distillation (13) comprenant au moins une colonne associé à une ligne d'échange thermique (11) dans laquelle on fait circuler un seul fluide calorigène, constitué par de l'air destiné à la distillation, sous une haute pression nettement supérieure à la pression de fonctionnement de l'appareil de distillation ;
- on alimente un stockage (23 ; 20), à l'extérieur de toute colonne de l'appareil au moins de façon intermittente, en ledit gaz sous forme liquide ; et
- on produit au moins une partie dudit gaz sous pression en amenant du gaz sous forme liquide soutiré dudit stockage à une pression de vaporisation supérieure à sa pression de stockage, et on le vaporise sous cette pression de vaporisation dans la ligne d'échange thermique (11) associée à l'appareil de distillation en condensant une partie de l'air sous la haute pression ;
- on alimente au moins en partie le stockage (23 ; 20) à partir d'une source extérieure (29; 34) qui n'est pas une colonne de l'appareil ;
- le gaz sous forme liquide est envoyé du stockage à la ligne d'échange sans passer par une colonne de l'appareil ;
- on envoie tout l'air qui a été condensé sous la haute pression en vaporisant le gaz sous forme liquide à l'appareil de distillation
et on récupère au moins partiellement la chaleur de vaporisation/réchauffement dudit gaz en produisant un débit additionnel d'oxygène liquide et/ou d'azote liquide soutiré d'une colonne de l'appareil.

2. Procédé suivant la revendication 1, caractérisé en ce qu'on produit simultanément au moins un constituant de l'air sous pression en amenant ce constituant sous forme liquide soutiré de l'appareil de distillation (13) à une pression de vaporisation supérieure à sa pression de soutirage, et en vaporisant ce liquide sous cette pression de vaporisation dans la ligne d'échange thermique (11).

3. Procédé suivant l'une des revendications 1 ou 2, caractérisé en ce que ledit gaz est un gaz de l'air dont le débit est supérieur au débit de ce gaz produit au même instant par l'appareil de distillation (13).

4. Procédé suivant l'une quelconque des revendications 1 à 3, caractérisé en ce qu'on effectue ladite vaporisation de façon permanente.

5. Procédé suivant la revendication 3, caractérisé en ce que, pendant certaines périodes, on envoie de l'appareil de distillation (13) au stockage (20) du gaz sous forme liquide, et pendant d'autres périodes, on effectue ladite vaporisation.

## Claims

1. Process for supplying a gas under pressure which is liquefiable at a cryogenic temperature under this pressure, to a plant (1) consuming at least one constituent of the air, wherein :
- air is distilled in a distillation apparatus (13) comprising at least one column associated with a heat exchange line (11) in which a single heating fluid is circulated, consisting of air to be distilled, under a high pressure appreciably greater than the operating pressure of the distillation apparatus;
- a storage vessel (23; 20) is supplied, outside any column of the apparatus, at least intermittently, with the said gas in liquid form; and
- at least part of the said gas under pressure is produced by bringing the gas in liquid form withdrawn from the said storage vessel to a vaporization pressure greater than its storage pressure, and is vaporized at this vaporization pressure in the heat exchange line (11) associated with the distillation apparatus by condensing part of the air under the high pressure;
- the storage vessel (23; 20) is supplied at least partially from an external source (29; 34) which is not a column of the apparatus;
- the gas in liquid form is conveyed from the storage vessel to the heat exchange line without passing through a column of the apparatus;
- all the air which was condensed under the high pressure while vaporizing the gas in liquid form is conveyed to the distillation apparatus,
- and the heat for vaporizing/reheating the said gas is at least partially recovered by producing an additional flow of liquid oxygen and/or liquid nitrogen withdrawn from the column of the apparatus.

2. Process according to claim 1, characterized in that at least one constituent of air is simultaneously produced under pressure by bringing this constituent in liquid form withdrawn from the distillation apparatus (13) to a vaporization pressure greater than the pressure at which it is withdrawn and by vaporizing this liquid under this vaporization pressure in the heat exchange line (11).

3. Process according to either of claims 1 or 2, characterized in that the said gas is a gas from the air of which the flow rate is greater than the flow rate of this gas produced at the same time by the distillation apparatus (13).

4. Process according to any of claims 1 to 3, characterized in that the said vaporization is carried out in a continuous manner.

5. Process according to claim 3, characterized in that gas in liquid form is conveyed from the distillation apparatus (13) to the storage vessel (20) during certain periods, and the said vaporization is carried out during other periods.

## Patentansprüche

1. Verfahren zur Versorgung einer zumindest einen Bestandteil der Luft verbrauchenden Anlage (1) mit einem unter Druck stehenden Gas, das bei einer kryogenen Temperatur unter diesem Druck verflüssigbar ist, wobei
- Luft in einer Destillationsvorrichtung (13) destilliert wird, die mindestens eine Kolonne in Verbindung mit einer Wärmeaustauschleitung (11) umfaßt, in der man ein einziges kalorisch nutzbares Fluid, das aus zur Destillation bestimmter Luft besteht, unter einem hohen, deutlich über dem Betriebsdruck der Destillationsvorrichtung liegenden Druck zirkulieren läßt;
- ein Speicher (23; 20), der sich außerhalb aller Kolonnen befindet, zumindest intermittierend mit dem Gas in flüssiger Form versorgt wird;
- mindestens ein Teil des unter Druck stehenden Gases dadurch erzeugt wird, daß Gas in flüssiger Form zugeführt wird, das dem Speicher bei einem Verdampfungsdruck oberhalb seines Speicherdrucks entnommen wird, und das Gas unter diesem Verdampfungsdruck in der der Destillationsvorrichtung zugeordneten Wärmeaustauschleitung (11) durch Kondensieren eines Teils der Luft unter dem hohen Druck verdampft wird;
- der Speicher (23; 20) zumindest teilweise aus einer externen Quelle (29; 34) versorgt wird, die nicht eine Kolonne der Vorrichtung ist;
- das Gas in flüssiger Form aus dem Speicher der Wärmeaustauschleitung zugeführt wird ohne eine Kolonne der Vorrichtung zu durchströmen;
- die gesamte, unter dem hohen Druck kondensierte Luft durch Verdampfen des Gases in flüssiger Form der Destillationsvorrichtung zugeführt wird;
- und die Wärme der Verdampfung/Erwärmung des Gases zumindest teilweise dadurch wiedergewonnen wird, daß ein zusätzlicher Strom aus flüssigem Sauerstoff und/oder flüssigem Stickstoff erzeugt wird.

2. Verfahren nach Anspruch 1, dadurch gekennzeichnet, daß gleichzeitig zumindest ein Bestandteil der unter Druck stehenden Luft produziert wird, daß dieser der Destillationsvorrichtung (13) bei einem Verdampfungsdruck oberhalb seines Entnahmedrucks in flüssiger Form entnommene Bestandteil in die Wärmeaustauschleitung (11) eingeleitet und diese Flüssigkeit unter diesem Verdampfungsdruck verdampft wird.

3. Verfahren nach Anspruch 1 oder 2, dadurch gekennzeichnet, daß dieses Gas ein Gas aus der Luft ist, dessen Durchflußmenge größer als die Durchflußmenge des Gases ist, das gleichzeitig mittels der Destillationsvorrichtung (13) produziert wird.

4. Verfahren nach einem der Ansprüche 1 bis 3, dadurch gekennzeichnet, daß die Verdampfung ständig stattfindet.

5. Verfahren nach Anspruch 3, dadurch gekennzeichnet, daß während bestimmter Perioden in flüssiger Form vorliegendes Gas aus der Destillationsvorrichtung (13) in den Speicher (20) geleitet wird und während anderer Perioden die Verdampfung stattfindet.
